# EUROPÄISCHE PATENTANMELDUNG

(11) **EP 0 857 647 A1**
(43) Veröffentlichungstag der Anmeldung: **12.08.1998**
(21) Anmeldenummer: 98101866.6
(22) Anmeldetag: 04.02.1998
(51) Int. Cl.: B64B 1/40, G09F 21/06

(54) **Fluggerät mit einer Hülle**

(30) Priorität: 08.02.1997 DE 19704773
(71) Anmelder: Ockelmann, Axel, 21244 Buchholz (DE); Arnold, Wilfried, 34125 Kassel (DE)
(72) Erfinder: Ockelmann, Axel, 21244 Buchholz (DE)
(74) Vertreter: Schupfner, Gerhard D.

(57) **Zusammenfassung**

Die Erfindung bezieht sich auf ein Fluggerät mit einer Hülle (7), die mittels eines unter Expansionsdruck stehenden gasförmigen Mediums in der Form prall stabilisiert ist, wobei die aus einem vom Licht durchscheinbaren Material bestehende Hülle (7) mittels Lastbändern (9) versteift ist und Darstellungsflächen aufweist, auf die bildliche Darstellungen mittels einer Bildwurfeinrichtung aufbringbar (15,16,17) sind, wobei die Bildwurfeinrichtung (15,16,17) eine Einrichtung vom Lasertyp ist, wobei eine Laserbildwurfvorrichtung (17) an einer Hülleninnenseite angeordnet ist und von dieser Hülleninnenseite die Darstellungsfläche an der gegenüberliegenden Hülleninnenseite bestrahlt, und wobei die Laserbildwurfvorrichtung (17) aus einer Gondel (12) angesteuert wird, die sich an der Unterseite (11) des Fluggerätes (1) befindet.

## Beschreibung

Die Erfindung bezieht sich auf ein Fluggerät mit einer Hülle, die mittels eines unter Expansionsdruck stehenden gasförmigen Mediums in der Form prall stabilisiert ist, wobei die Hülle mittels Lastbändern versteift ist und wenigstens eine Darstellungsfläche aufweist, auf die bildliche Darstellungen mittels einer Bildwurfeinrichtung von innen auf die Innenseiten der Darstellungsfläche aufbringbar sind, und wobei das Hüllenmaterial derart lichtdurchscheinbar ist, daß die auf die Innenseite der Hülle aufgestrahlten bildlichen Darstellungen von außen her gut sichtbar sind.

Derartige Fluggeräte sind bekannt. Man kann bei ihnen unterscheiden zwischen Fluggeräten, deren Hüllen durch das Einleiten von Heißluft stabilisiert werden, oder Fluggeräten, deren Hülle durch Heliumgas auf Spannung gebracht wird, das in geschlossenen Behältern mit flexiblen Wänden eingeschlossen ist.

Die Hüllen dieser Fluggeräte bestehen aus einem reißfesten Gewebe, das auf der Innenseite mit Verstärkungen, sogenannten Lastbändern versehen ist. Diese Lastbänder verlaufen in gleichbleibenden Abständen in senkrechten und waagerechten Richtungen; sie bilden damit ein Verstärkungsgerüst.

Es ist auch bekannt, beispielsweise bei größeren Luftschiffen, steife Innenkonstruktionen vorzusehen, die die Hülle auf Spannung halten.

Weiterhin ist es bekannt, auf den Außenseiten der Hüllen, die große Darstellungsflächen bilden, Darstellungen anzubringen, die beispielsweise Werbezwecken dienen. Eine einmal aufgebrachte Darstellung ist aber schwierig, oder wenigstens nur mit großem Aufwand von der Darstellungsfläche zu entfernen.

In der DE 33 27 944 A1 ist die Möglichkeit angedeutet, aus dem Innenraum heraus mittels eines Projektors Riesendias oder bewegte Bilder auf die transparente Ballonschiffhülle zu projizieren. Der Gedanke ist aber nicht zu realisieren, da die Projizierung bei einem Heißluftschiff aus der Gondel heraus erfolgen muß und damit zu Verzerrungen führt. Bei einem als Blimp bekannten Pralluftschiff, das mit Helium gefüllt ist, sind die Stoffe der Wände gummiert, um gasdicht zu sein. Die Gummierung macht den Hüllenstoff so lichtundurchlässig, daß von innen mittels Dia- oder Filmprojektoren aufprojizierte Lichtbilder von außen nicht sichtbar sind. Wenn das machbar wäre, dann wäre bei einem Blimp zu überlegen,die Projektoren an die Seitenflächen in der Hülle anzuordnen, um so zu einer verzerrungsfreien Projektion zu kommen. Nach dem Füllen mit dem Helium kann der Benutzer aber nicht ohne weiteres in den gasgefüllten Raum hinein, um einen Bilderwechsel vorzunehmen. Deshalb scheidet dieser Gedanke aus.

Es ist Aufgabe der Erfindung, ein Fluggerät zu schaffen, bei dem außen gut sichtbare und unverzerrte bildliche Darstellungen, die von innen auf die Darstellungsflächen gestrahlt werden, spielend leicht veränderbar sind.

Die gestellte Aufgabe ist erfindungsgemäß dadurch gelöst, daß die Bildwurfeinrichtung eine Einrichtung vom Lasertyp ist, wobei eine Laserbildwurfvorrichtung an einer Hülleninnenseite angeordnet ist und von dieser Hülleninnenseite die Darstellungsfläche an der gegenüberliegenden Hülleninnenseite bestrahlt, wobei die Laserbildwurfvorrichtung aus einer Gondel angesteuert wird, die sich an der Unterseite des Fluggerätes befindet.

Zur Anstrahlung einer Darstellungsfache an einer Hülleninnenseite mit einem Bild genügt eine Laserbildwurfvorrichtung. Die Projektoren können mit einem Öffnungswinkel von 90° arbeiten.
Da jedes Luftschiff in der Regel zwei als Darstellungsflächen geeignete Hüllenseiten hat, ist nach einer weiteren Ausgestaltung der Erfindung vorgesehen, daß beim Vorhandensein von Darstellungsflächen an den gegenüber befindlichen Hüllenseiten jede der Darstellungsflächen von einer Laserbildwurfvorrichtung bestrahlt wird.

Die Darstellung einer Szene oder eines Bildes kann eine bedeutende Größe haben. Bei dem Abstrahlen der Darstellung kann dies die Bildwiedergabe schwächen. In Anpassung an diesen Fall ist vorgesehen, daß die Bildwurfeinrichtung vom Lasertyp Laserbildwurfvorichtungen aufweist, die von den Hülleninnenseiten her an den jeweils gegenüberliegenden Hülleninnenseiten Darstellungsflächen bestrahlen, wobei sich ein Gesamtbild jeder einzelnen bildlichen Darstellung aus mehreren synchron nebeneinander abgebildeten Teilbildern ergibt, die von in Gruppen angeordneten Laserbildwurfvorrichtungen abstrahlbar sind.

Die Lasereinrichtung kann vom Ionen- oder Diodentyp sein. Die Ansteuerung der Laserbildwurfeinrichtungen erfolgt vorzugsweise mittels einer in der Gondel angeordneten Datenbank mit Steuergerät.

Die Laservorrichtungen, die auch als Scanner bezeichnet werden, haben eine ausreichend große Leuchtdichte, um ein auch auf große Entfernung gut strahlendes Gesamtbild zu erzeugen. Eine Laserabstrahlung hat eine solche Lichtintensität, daß das von innen auf die Hülle gestrahlte Licht auch die gummierte Hüllenwand so durchstrahlt, als sei sie gut transparent. Die Aufteilung der Bildwurfeinrichtung in eine Bildwurfvorrichtungen an der Hüllenwand und in eine Datenbank mit Steuergerät in der Gondel macht es einem Co-Piloten oder Piloten möglich, völlig frei zu entscheiden, welche Darstellung er auf den Darstellungsflächen abbilden will.

Der Nutzer ist auch frei, welche Art der Darstellung er wählt. So kann er bestimmen, daß die Laserbildwurfeinrichtung zur Abgabe bewegter Programmabläufe genutzt ist.

Ebenso kann er zu einem anderen Zeitpunkt entscheiden, daß die Laserbildwurfeinrichtung zur Abgabe stehender Bilder genutzt wird.

Nach einer weiteren Ausgestaltung der Erfindung ist vorgesehen, daß an den Lastbändern an der Hülleninnenseite im Bereich der Darstellungsflächen an vorgegebenen Plätzen Aufnahmebehälter angeordnet sind, die paßgerecht zur Unterbringung der einzelnen Bildwurfvorrichtungen, der Scanner, ausgebildet sind. In weitererer Ausgestaltung der Erfindung ist dabei vorgesehen, daß die Aufnähmebehälter für die Laserbildwurfvorrichtungen aus an die Lastbänder angenahten Stoffbeuteln bestehen. Wenn diese Stoffbeutel paßgerecht für die Scanner gefertigt und an die Lastbänder angenäht sind, dann ist damit deren Abstrahlrichtung eindeutig festlegbar. Die Laserbildwurfvorrichtungen sind von geringem Gewicht und lassen sich problemlos an der Hülleninnenseite unterbringen.

Nach einer weiteren Ausgestaltung der Erfindung ist vorgesehen, daß die Versorgungsleitungen zwischen der Datenbank mit dem Steuergerät und den einzelnen Laserbildwurfvorrichtungen an der Hülleninnenseite an den Lastbändern angeordnet sind.

Nach einer weiteren Ausgestaltung der Erfindung ist vorgesehen, daß die Versorgungsleitungen zwischen der Datenbank mit dem Steuergerät und den einzelnen Laserbildwurfvorrichtungen an der Hüllenaußenseite angeordnet sind. Die Aufrüstung eines Luftschiffes oder Ballons läßt sich bei einer derartigen Anordnung erleichtern.

Die Verbindungsleitungen sind dabei in vorteilhafter Weise Glasfaserkabel.

Nach einer weiteren Ausgestaltung der Erfindung ist vorgesehen, daß das unter Expansionsdruck stehende gasförmige Medium Heißluft ist, die im Bereich der Gondel erzeugbar ist. Ebenso ist es möglich, daß das unter Expansionsdruck stehende gasförmige Medium ein inertes Gas, insbesondere Helium, ist, das in gasdicht geschlossenen Behältnissen eingeschlossen ist.

Es ist vorgesehen, das Luftschiff oder den Ballon beispielsweise in ca. 300 m Höhe kreuzen zu lassen, wobei insbesondere nachts eine wirkungsvolle Darstellung erzielt wird. Es ist auch vorgesehen, das Fluggerät beispielsweise auf Ausstellungen am Boden einzusetzen. Dabei wirkt es wie eine Filmleinwand in einer besonders charakterischen Gestaltung.

Die Erfindung wird anhand der Zeichnungen näher erläutert. Es zeigen:
Fig. 1 ein Fluggerät in Form eines Luftschiffes mit einer Lichtwurfeirrrichtung, mit der auf Darstellungsflächen an den Hülleninnenseiten von innen her Darstellungen aufstrahlbar sind,
Fig. 2 eine in Felder aufgeteilte Gesamtbildfläche an dem Luftschiff nach Fig. 1,
Fig. 3 an einer der Hüllenseiten innen angebrachte Bildwurfvorrichtungen, mit denen die einzelnen Teilbilder einer Gesamtbildfläche nach Fig. 2 anstrahlbar sind,
Fig. 4 einen Schnitt durch das Luftschiff längs der Linie IV-IV, wobei die Anordnung der Bildwurfvorrichtungen auf den Innenflächen der Hüllenseiten erkennbar sind,
Fig. 5 eine Ansicht V eines Aufnahmebehälters für eine einzelne Bildwurfvorrichtung, wobei der Aufnahmebehälter an einem Lastband befestigt und mit einer Bildwurfvorrichtung ausgerüstet ist.

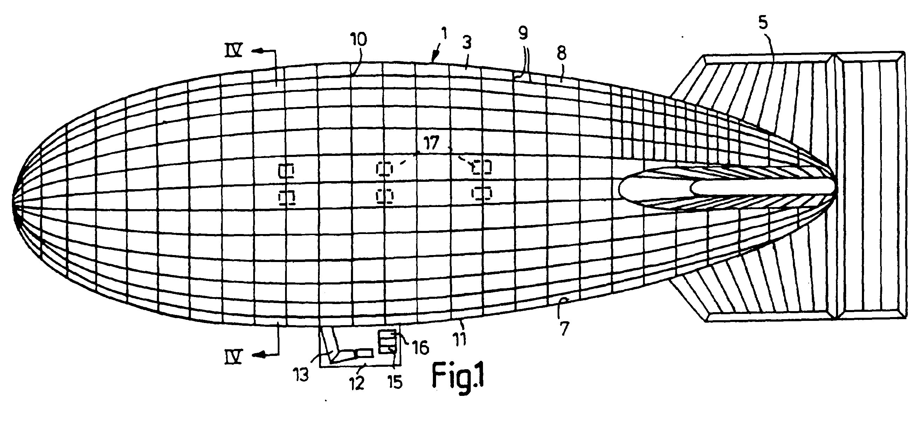

In Fig. 1 ist ein Fluggerät in Form eines Luftschiffes 1 dargestellt, das einen langgestreckten Körper 3 und ein Leitwerk 5 aufweist, mit dem das Luftschiff 1 lenkbar ist. Das Fluggerät kann aber ebensogut ein nicht dargestellter, mehr kugeliger Ballon sein. Ein wesentliches Kennzeichen des Fluggerätes, ganz gleich ob es ein langgestrecktes Luftschiff 1 oder ein Ballon ist, besteht darin, daß die Hülle 7 des Fluggerätes von innen her mittels eines Gases aufgebläht, bzw. in der Form prall ausgesteift ist. Es handelt sich dabei um ein sogenanntes Prallluftschiff. Die Aussteifung mittels eines Gases ersetzt ein aussteifendes Gerüst. Im folgenden wird nur das Auführungsbeispiel mit dem langgestreckten Körper 3 beschrieben. Das Ausführungsbeispiel ist als stellvertretend für alle anderen möglichen Flugkörperformen und Flugkörper in Prallluftbauweise zu verstehen.

Die Hülle 7 des Luftschiffes 1 besteht aus einem reißfesten, jedoch möglichst leichten Hüllengewebe 8, das gut lichtdurchscheinbar ist. Dieses Hüllengewebe 8 ist zu seiner Verstärkung mit Lastbändern 9 versehen, die unter sich einen Kreuzverband 10 bilden. Dazu sind die Lastbänder 9 in etwa gleichbleibendem Abstand parallel und in senkrechten Richtungen miteinander und mit dem Hüllengewebe 8 vernäht.

An der Unterseite 11 des Luftschiffes 1 ist eine Gondel 12 vorgesehen, in der vorzugsweise ein Pilot und ein Co-Pilot Platz finden. In der Gondel 12 kann ein Heißluftgebläse 13 angeordnet sein, mit dem das Luftschiff 1 aufblasbar ist. Das Heißluftgebläse 13 kann entfallen, wenn im Inneren 14 des Luftschiffes 1 nicht dargestellte, aufblasbare und geschlossene Behältnisse vorgesehen sind, in die ein inertes Gas, beispielsweise Helium, eingefüllt ist. Sowohl das inerte Gas, als auch die Heißluft sorgen mit ihrem Expansionsdruck dafür, daß die Hülle 7 des Luftschiffes 1 prall gefüllt ist.

In der Gondel 12 sind vorzugsweise im Bereich des Co-Pilotensitzes eine Bildwurfeinrichtung 15 und ein Steuergerät 16 vorgesehen. Die Bildwurfeinrichtung 15 kann beispielsweise eine Laserbank sein, die von einem tragbaren Datengerät, wie einem 12-Volt PC mit mindestens 90 Mhz Taktfrequenz steuerbar ist. Eine das Steuergerät 16 steuernde Software hat die Aufgabe, die Lasersignale auf einzelne, beispielsweise sechs Bildwurfvorrichtungen 17, zu verteilen. Weiter sind an der Bildwurfeinrichtung 15, der Laserbank, ein Laserkopf einer Strahlungsquelle mit Einkoppeloptiken und Farbsteuerungen installiert. Von dort gehen später beschriebene Glasfaserkabel 23, sowie Datenleitungen für die Bildwurfvorrichtungen bildenden Scanner 17 ab.

Die Leistung von Laserbildwurfvorrichtungen ist heute so groß, daß ein auf eine Hülleninnenseite 21 gestrahltes Bild von einer einzigen Laserbildwurfvorrichtung 17 erzeugt wird. In der folgenden Beschreibung ist als Alternative eine Einrichtung mit mehreren Laserbildwurfvorrichtungen, bzw. Scannern 17 beschrieben, die Teilbilder 18 abstrahlen, die synchron zusammengesetzt, ein Gesamtbild 24 ergeben.

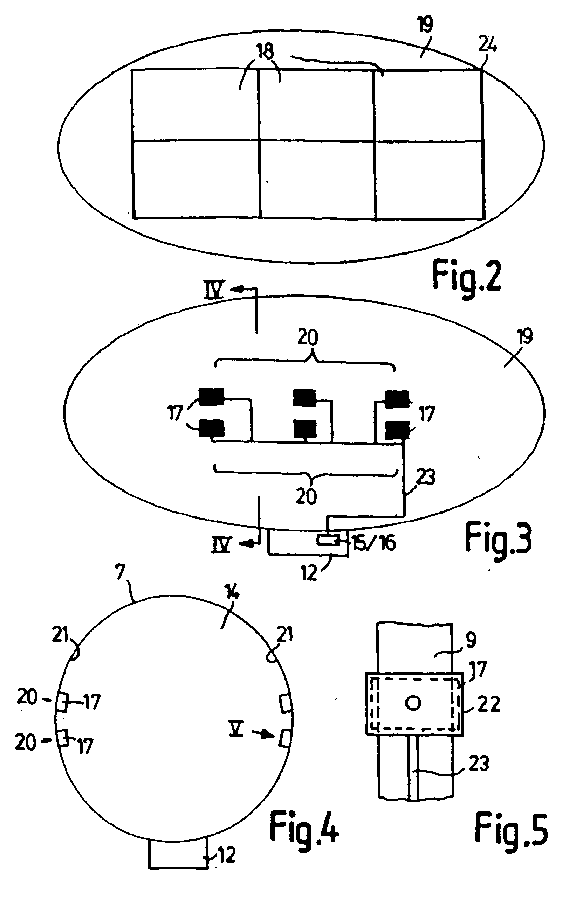

Es sind, wie Fig. 2 zeigt, sechs Scanfelder 18 vorgesehen, die zu je drei Feldern 18 übereinander liegen. Die Scanner 17 werden von der Laserbank 15 und dem Steuergerät 16 derart syncron angesteuert, daß die auf die Scanfelder 18 geworfenen Teilbilder 18 ein Gesamtbild 24 ergeben. Die Gesamtbilder 24 sind dabei vorzugsweise Laufbilder. Es ist aber selbstverständlich auch möglich, Standbilder zu erzeugen. Als Inhalt der bildlichen Darstellungen sind vorzugsweise Werbespotprogramme vogesehen.

Wie Fig. 3 zeigt, sind die Scanner im Bereich der an der Hülle 7 des Luftschiffes 1 vorgegebenen Darstellungsflächen 19 ebenso wie die Scanfelder in Dreier-Gruppen übereinander angeordnet. Fig. 4 ergänzt diese Darstellung anhand des Schnittes IV-IV in Fig. 1. Dabei ist erkennbar, daß die Scannergruppen 20 an beiden Hülleninnenseiten 21 vorgesehen sind. Die Scanner 17 der Gruppen 20 werfen die Bilder dabei jeweils auf die gegenüber liegende Hülleninnenseite 21.

Fig.5 zeigt, wie die Scanner 17 an den Hülleninnenseiten 21 befestigt sind. Dazu sind an vorbestimmten Stellen von Lastbändern 9 Stoffbeutel 22 festgenäht. In diese Stoffbeutel 22, die Form von Würfeln haben, sind die Scanner 17 paßgerecht eingenäht.

Die Scanner 17 sind durch Glasfaserkabel 23 mit dem Steuergerät 16 und der Laserbank 15 verbunden. Die Glasfaserkabel 23 sind beispielsweise in oder an die Lastbänder 9 angenäht. Eine Führung an der Hülleninnenseite 21 ist aus Fig. 5 erkennbar. Es ist aber auch möglich und sogar vorteilhaft, die Glafaserkabel 21 an der Hüllenaußenseite zu führen. Die Glasfaserkabel 23 führen, wie Fig. 3 zeigt, zur Gondel (12) an der Unterseite 11 des Luftschiffes. Von dort sind sie gebündelt zu dem Steuergerät 16 und der Laserbank 15 im Bereich des Co-Piloten weitergeführt.

Das Luftschiff 1 mit der Bildwurfeinrichtung, die im Inneren 14 der Luftschiffhülle 7 arbeitet, verfolgt das Ziel, bei Dunkelheit und guten meteorologischen Bedingungen in einer Höhe von ca. 300m über bevorzugten Gebieten zu kreuzen und dabei Werbespotprogramme zu zeigen.

Die Gesamtfläche, die von den Scannern 17 jeweils auf der gegenüber liegenden Hülleninnneseite 21 des Luftschiffes ausgeleuchtet wird, kann eine Größe von beispielsweise 6,6 mal 5 Metern haben. Die Scanflächen 18 und die Gesamtbildfläche 24 können zwar vergrößert werden; dies geht aber zu Lasten der Bildpunktdichte.

Es ist möglich, entweder mit Ionenlasern oder Diodenlasern zu arbeiten. Der jeweilige Einsatz richtet sich nach den Kosten und der Leistung der Geräte.

## Patentansprüche

1. Fluggerät mit einer Hülle (7), die mittels eines unter Expansionsdruck stehenden gasförmigen Mediums in der Form prall stabilisiert ist, wobei die Hülle (7) mittels Lastbändern (9) versteift ist und wenigstens eine Darstellungsfläche (19) aufweist, auf die bildliche Darstellungen mittels einer Bildwurfeinrichtung (15,16,17) von innen auf die Innenseiten der Darstellungsfläche (19) aufbringbar sind, und wobei das Hüllenmaterial derart lichtdurchscheinbar ist, daß die auf die Innenseite (21) der Hülle (7) aufgestrahlten bildlichen Darstellungen (24) von außen her gut sichtbar sind, dadurch gekennzeichnet, daß die Bildwurfeinrichtung (15,16,17) eine Einrichtung vom Lasertyp ist, wobei eine Laserbildwurfvorrichtung (17) an einer Hülleninnenseite (21) angeordnet ist und von dieser Hülleninnenseite (21) die Darstellungsfläche an der gegenüberliegenden Hülleninnenseite (21) bestrahlt, und wobei die Laserbildwurfvorrichtung (17) aus einer Gondel (12) angesteuert wird, die sich an der Unterseite (11) des Fluggerätes (1) befindet.

2. Fluggerät nach Anspruch 1, dadurch gekennzeichnet, daß beim Vorhandensein von Darstellungsflächen (19) an den gegenüber befindlichen Hüllenseiten jede der Darstellungsflächen (19) von einer Laserbildwurfvorrichtung (17) bestrahlt wird.

3. Fluggerät nach einem der Ansprüche 1 und/oder 2, dadurch gekennzeichnet, daß die Bildwurfeinrichtung (15,16,17) vom Lasertyp Laserbildwurfvorrichtungen (17) aufweist, die von den Hülleninnenseiten (21) her an den jeweils gegenüberliegenden Hülleninnenseiten (21) Darstellungsflächen bestrahlen, wobei sich ein Gesamtbild (24) jeder einzelnen bildlichen Darstellung (24) aus mehreren synchron nebeneinander abgebildeten Teilbildern (18) ergibt, die von in Gruppen (20) angeordneten Laserbildwurfvorrichtungen (17) abstrahlbar sind.

4. Fluggerät nach einem oder mehreren der Ansprüche 1 bis 3, dadurch gekennzeichnet, daß die Ansteuerung der Laserbildwurfvorrichtungen (17) von einer in der Gondel (12) angeordneten Datenbank (15) mit Steuergerät (16) erfolgt.

5. Fluggerät nach einem oder mehreren der Ansprüche 1 bis 4, dadurch gekennzeichnet, daß die Lasereinrichtungen vom Ionen- oder Diodentyp ist.

6. Fluggerät nach einem oder mehreren der Ansprüche 1 bis dadurch gekennzeichnet, daß die Laserbildwurfeinrichtungen (15,16,17) zur Abgabe bewegter Programmabläufe genutzt sind.

7. Fluggerät nach einem oder mehreren der Ansprüche 1 bis 6, dadurch gekennzeichnet, daß die Laserbildwurfeirrichtungen (15,16,17) zur Abgabe stehender Bilder genutzt sind.

8. Fluggerät nach einem oder mehreren der Ansprüche 1 bis 7, dadurch gekennzeichnet, daß die einzelnen Laserbildwurfvorrichtungen (17), die Scanner, an den Lastbändern (9) an vorgegebenen Plätzen in paßgerechten Aufnahmebehältern (22) angeordnet sind.

9. Fluggerät nach Anspruch 8, dadurch gekennzeichnet, daß die Aufnahmebehälter (22) für die Laserbildwurfvorrichtungen (17) aus an die Lastbänder (9) angenähten Stoffbeuteln bestehen.

10. Fluggerät nach einem oder mehreren der Ansprüche 1 bis 9, dadurch gekennzeichnet, daß die Versorgungsleitungen (23) zwischen der Datenbank (15) mit dem Steuergerät (16) und den einzelnen Laserbildwurfvorrichtungen (17) an der Hülleninnenseite (21) an den Lastbändern (9) angeordnet sind.

11. Fluggerät nach einem oder mehreren der Ansprüche 1 bis 9 , dadurch gekennzeichnet, daß Versorgungsleitungen (23) zwischen der Datenbank (15) mit dem Steuergerät (16) und den einzelnen Laserbildwurfvorrichtungen (17) an der Hüllenaußenseite angeordnet sind.

12. Fluggerät nach Anspruch 10 oder 11, dadurch gekennzeichnet, daß Versorgungsleitungen (23) zwischen der Datenbank (15) und dem Steuergerät (16) einerseits und den einzelnen Bildwurfvorrichtungen (17) andererseits Glasfaserkabel sind.

13. Fluggerät nach einem oder mehreren der Ansprüche 1 bis 12, dadurch gekennzeichnet, daß das unter Expansionsdruck stehende gasförmige Medium Heißluft ist, die im Bereich der Gondel erzeugbar ist.

14. Fluggerät nach einem oder mehreren der Ansprüche 1 bis 12, dadurch gekennzeichnet, daß das unter Expansionsdruck stehende gasförmige Medium ein inertes Gas, insbesondere Helium, ist, das in gasdicht geschlossenen Behältnissen eingeschlossen ist.
